# EUROPEAN PATENT APPLICATION

(11) **EP 2 312 269 A1**
(43) Date of publication of application: **20.04.2011**
(21) Application number: 10388011.8
(22) Date of filing: 25.08.2010
(51) Int. Cl.: G01B 11/25, B60L 5/24

(54) **A method and a system for inspecting a pantograph**

(30) Priority: 26.08.2009 DK 200900960
(71) Applicant: Image House A/S, 1169 Copenhagen K (DK)
(72) Inventor: Steenberg, Hans, 1169 Copenhagen K (DK)
(74) Representative: Larsen, Hans Ole

(57) **Abstract**

The invention relates to a system for the inspection of pantographs and comprising at least one light source (1) which illuminates the pantograph, at least one camera (2) which is connected to a processor, which analyzes the images in order to determine the state of the pantograph. The light source (1) is constructed as lasers which form a plurality of parallel laser lines on the pantograph. At least one analysis module in the processor compares the recorded laser lines with predetermined parameters and/or patterns in order to detect irregularities in the surface of the carbon path (3) and disuniform wear on the carbon path (3). Alternatively, the processor is also capable of calculating the thickness of the carbon path (3). The state of the horn (5) of the pantograph is determined by means of the camera (2) or at least one sensor unit (6, 7, 8) connected to the processor.

## Description

### Technical field

The present invention relates to a method and a system for the inspection of pantographs, in particular on railway carriages, comprising at least one light source which illuminates at least one pantograph, at least one camera which records an image of the pantograph, and a processor which analyzes the images from the camera in order to determine the state of the pantograph.

The present invention also relates to a system for the inspection of pantographs, comprising at least one light source intended to illuminate at least one pantograph, at least one camera disposed in another plane than the light source, and a processor connected to the light source and the camera and intended to analyze the images from the camera.

### The prior art

Various systems for the inspection of pantographs are described in the literature. An example of such a system is mentioned in WO 2005/090903 A1, which describes a system for the inspection of pantographs on railway carriages which are in motion. The system comprises three lasers which transmit a laser beam to the side of the pantograph, and two cameras connected to a processor which analyzes the images from the camera in order to determine the height of the pantograph. This structure has the drawback that it only determines the height of the carbon in a plurality of points along the pantograph.

JP8336204 A describes a projector which illuminates pantographs from the side, a light meter connected to a CCD camera, and a processor for the CCD camera which analyzes the image from the camera. The processor analyzes the image in order to determine the intensity of the spark which is generated between the overhead line and the pantograph.

This structure has the drawback that the system does not analyze the state of the pantograph, but the connection between the pantograph and the overhead line.

None of these solutions describes an inspection system which is capable of analyzing the state of the pantograph over its entire length. Moreover, none of these solutions describes an inspection system which is capable of detecting the state on the ends of the pantograph.

### The object of the invention

The present invention remedies the problems of the most immediate prior art by providing a method for the inspection of pantographs, characterized in that the light source illuminates the pantograph from a vertical plane and emits a plurality of parallel laser beams which illuminate the entire or parts of the pantograph, such as at least one carbon path on the pantograph. Hereby, it is possible to illuminate each individual carbon path on the pantograph when the pantograph passes the light sources.

According to claim 2, the light source emits one or more parallel laser beams, which form a plurality of laser lines on the upper side of the pantograph, which are approximately parallel with the longitudinal direction of the pantograph. Hereby, it is possible to illuminate the carbon path on the pantograph even on clear sunny days, thereby allowing a correct inspection of the pantographs to be made.

According to claim 3, the camera is connected to at least one analysis module and at least one decision module in the processor, which analyze the images in order to determine the state of the pantograph. According to claim 4, the decision module determines either the thickness of at least one carbon path on the pantograph, irregularities in the surface of the carbon path and/or disuniform wear on the carbon path on the basis of the laser lines. Hereby, it is possible to determine the state of the pantograph concerned on the basis of the recorded horizontal laser lines.

According to claim 5, at least the one horn on the pantograph passes at least one sensor unit, which comprises at least one transmitter and at least one receiver, and which registers when the pantograph passes the sensor unit. According to claim 6, the sensor units are connected to a sensor module which determines the state of the pantograph. According to claim 7, the light source illuminates at least the one horn of the pantograph, and an analysis module and a decision module in the processor determine the state of the horn of the pantograph on the basis of the images. Hereby, it is possible to determine the state of the horn of the pantograph.

The present invention also provides a system for the inspection of pantographs, characterized in that the light source is disposed in a vertical plane and emits a plurality of parallel laser beams which illuminate the entire or parts of the pantograph, such as at least one carbon path on the pantograph. Hereby, it is possible to illuminate each individual carbon path on the pantograph when the pantograph passes the light sources.

According to claim 9, the light source comprises one or more lasers, and the lasers emit one or more parallel laser beams, which form a plurality of laser lines on the upper side of the pantograph, which are approximately parallel with the longitudinal direction of the pantograph. Hereby, it is possible to illuminate the carbon path on the pantograph even on clear sunny days, thereby allowing a correct inspection of the pantographs to be made.

According to the claim 10, the camera is an area scan camera connected to at least one analysis module and at least one decision module in the processor, which determine the state of the pantograph on the basis of the images. Hereby, it is possible to determine the state of the pantograph concerned on the basis of the recorded laser lines.

According to claim 11, the system comprises one or more sensor units, which are disposed near the one horn or both horns on the pantograph, and which are intended to record the state of the horn of the pantograph. According to claim 12, the sensor unit comprises at least one transmitter and at least one receiver, both of which are connected to a sensor module in the processor, and which are capable of detecting when the pantograph passes the sensor units. According to claim 13, the light source illuminates at least the one horn on the pantograph, and the camera is connected to an analysis module and a decision module in the processor, which determine the state of the horn of the pantograph on the basis of the images. Hereby, it is possible to determine the state of the horn of the pantograph.

### The drawing

Exemplary embodiments of the invention will be explained more fully below with reference to the drawing, in which
- Fig. 1: shows an exemplary embodiment of the system, seen from the side,
- fig. 2: shows the system shown in figure 1, seen from above,
- fig. 3: shows image examples of cracks in the carbon path,
- fig. 4: shows image examples of notches in the carbon path,
- fig. 5: shows image examples of disuniform wear on the carbon path, and
- fig. 6: shows an image example of a recurring defect recorded by several laser lines.

### Description of the exemplary embodiments

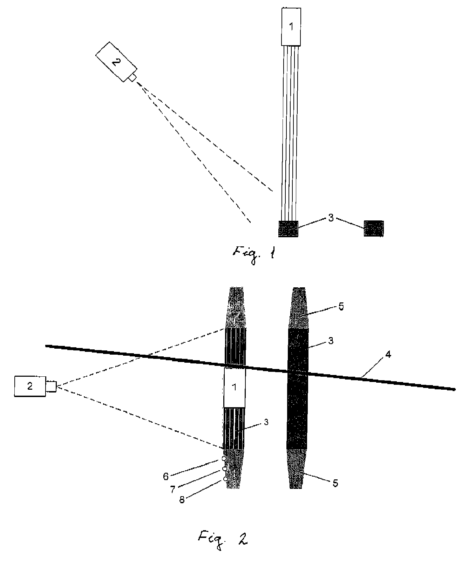

Figures 1 and 2 show an exemplary embodiment of the system in the form of a system for the inspection of pantographs (also called current collectors), which may be arranged on one or more railway vehicles. The inspection system may be constructed as a recording station, which is capable of inspecting one or more pantographs on the railway vehicles while the railway vehicles pass the recording station.

The inspection system may comprise one or more light sources 1 intended to illuminate the entire or parts of the pantograph. In a preferred embodiment, the light source 1 may be arranged such that it is capable of illuminating the entire or parts of at least one carbon path 3 on a pantograph which is in contact with one or more external overhead lines 4 (also called overhead wires). The light source 1 may be constructed as one or more lasers or another form of light source capable of emitting light or another form of electromagnetic radiation, which may be captured by at least one camera 2. The light source 1 is capable of emitting the light or the electromagnetic radiation with a sufficiently high light level and/or a suitable frequency spectrum, so that external light conditions, such as the sun, will not affect the illumination of the pantograph. Hereby, it is possible to illuminate at least one carbon path 3 on the pantograph even on clear sunny days, thereby allowing a correct inspection of the pantographs to be made.

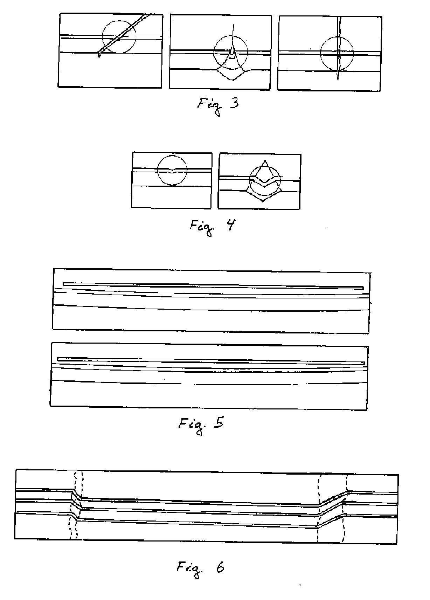

The light source 1 may be constructed so as to be capable of emitting one or more laser beams which form one or more laser lines on one or more sides of the carbon path 3. The laser beams may be angled relative to each other, so that the laser lines formed divide the entire or parts of the carbon path 3 into a plurality of sections, as shown in figures 2 and 6, which may be recorded by one or more cameras 2. Alternatively, the light source 1 may comprise a plurality of separate lasers, each of which emits at least one laser beam, and which together form the laser lines.

In a preferred embodiment, one or more lasers 1 may be arranged in a vertical plane above the carbon path 3 on the pantograph. The lasers 1 may be arranged at one or more predetermined distances from the pantograph. The lasers 1 may be arranged so as to form a plurality of laser lines on the upper side of the carbon path 3. The laser lines may be approximately parallel with the longitudinal direction of the pantograph, as shown in figure 2. Hereby, it is possible to divide each individual carbon path 3 on the pantograph into a plurality of sections when the pantograph passes the light source 1.

One or more cameras 2 may be disposed in at least another plane, which may be arranged at one or more predetermined angles relative to the pantograph, as shown in figure 1. The cameras 2 may be arranged so as to be capable of recording one or more individual images or live images of one or more sides of each carbon path 3 on the pantograph. In a preferred embodiment, the cameras 2 may be arranged so as to be capable of recording images of the laser lines on the upper side of the carbon path 3.

The pantograph may be connected to a resilient structure (not shown) on the roof of the railway vehicle, whereby the pantograph may move up and down when the railway vehicle passes the inspection system. Therefore, the camera 2 may be constructed as an area scan camera which may have a rectangular or square pixel matrix capable of recording at least one image in black/white and/or colours. The visual field of the camera 2 and thereby its resolution may be adapted to the area of movement of the pantograph. The camera may have such an exposure time that the recorded images do not become blurred when the railway vehicle passes at a maximum speed. Hereby, it is possible to record an image of the pantograph when the railway vehicle passes the recording station.

The camera 2 and/or the light source 1 may be connected to at least one processor unit (not shown), which may comprise a processor connected to at least one memory. The processor may comprise an illumination module which may be connected to and which may be capable of controlling the light source 1 by means of one or more control signals. The processor may comprise at least one analysis module, which may be connected to the camera 2, and which is capable of analyzing the images that may be stored in the memory. The analysis module is capable of recording and extracting various parameters and/or patterns which are descriptive of the state of the pantograph. Then, the extracted data may be passed further on to one or more decision modules, which are capable of comparing the data to one or more reference values and/or reference patterns and/or calculating one or more values from the data. Hereby, it is possible to determine the state of the pantograph concerned on the basis of the laser lines recorded.

In a preferred embodiment, at least one decision module is capable of detecting irregularities in the surface of the carbon path 3 on the basis of the laser lines recorded. The irregularities may be cracks, knocked-off chips, missing carbon pieces or other matters which are descriptive of the state of the carbon path 3. Figure 3 shows three image examples of recorded cracks (marked by a circle), which may appear as ruptures on the recorded laser line and/or as a change/variation of the shape of the laser line. On an entirely new carbon path 3, the laser line on the surface will appear as a coherent laser line, which will be essentially linear and approximately have the same shape. The surface profile of a new carbon path 3 may alternatively be stored in the memory as a plurality of reference values and/or patterns with which the recorded laser lines may be compared. When a crack is detected in the surface, the width and optionally the depth of the crack may be calculated on the basis of the resolution of the camera 2. Figure 4 shows two image examples of a recorded knocked-off chip and a missing carbon piece (marked by a circle), respectively, which may appear as a minor area where the laser line differs from a reference line, e.g. the laser line formed on a new carbon path 3. This minor area may be an area having a width which is smaller than or equal to a predetermined width. When a knocked-off chip or a missing carbon piece is detected in the surface, the width and depth of the chip or of the carbon piece may be calculated on the basis of the resolution of the camera 3.

At least one second decision module is capable of detecting disuniform wear on the carbon path 3 on the basis of the laser lines recorded. Figure 5 shows two image examples of a recorded disuniform wear (marked by a horizontal line). Disuniform wear in the surface may appear as a larger area where the laser line differs, e.g. is curved relative to a reference line, e.g. the laser line formed on a new carbon path 3. This larger area may be an area having a width which is larger than a predetermined width.

Alternatively, at least one third decision module is capable of calculating the thickness of the carbon path 3 on the basis of the laser lines recorded. The thickness of the carbon path 3 may be calculated on the basis of one or more predetermined reference points or reference areas on the pantograph.

Alternatively, the decision modules are capable of comparing the data of each individual laser line with each other, thereby making it possible to determine whether the same state (irregularity) is recorded by one or more of the laser liners, as shown in figure 6. Hereby, it is possible to determine the dimensions of the detected irregularities, and whether the irregularities occur in the entire width of the carbon path 3 or not.

At least one fourth decision module connected to at least one second analysis module is capable of calculating the physical position of the pantograph relative to the railway vehicle, such as the roof of the railway vehicle, on the basis of the images. The decision module may be connected to at least one speedometer which is capable of measuring the speed of the railway vehicle. The decision module is capable of determining the pressure applied by the pantograph and thereby the resilient structure to the overhead line 4, on the basis of the position of the pantograph and the speed of the railway vehicle. Hereby, it is possible to make an upwardly extending pressure measurement (also called upward pressure measurement) on the resilient structure when the pantograph passes the recording station.

The processor unit may comprise a sensor module connected to at least one sensor unit 6, 7, 8. The sensor units 6, 7, 8 may be disposed near the one end or both ends of the pantograph, which may be shaped as a horn 5. The sensor units 6, 7, 8 may comprise at least one transmitter and at least one receiver. The sensor units 6, 7, 8 may be arranged with the same spacing between each other and/or be arranged staggered relative to each other, as shown in figure 2. In a preferred embodiment, the transmitter and the receiver may be implemented in the same sensor unit 6, 7, 8, so that the receiver is capable of recording the reflected signal from the transmitter when the pantograph passes by. On the basis of the reflected signals and the signals from the transmitters, the sensor module is capable of calculating one or more parameters which are descriptive of the horn 5 of the pantograph, e.g. the time difference between the individual sensor units 6, 7, 8. Then, the sensor module may compare the calculated parameters with one or more reference parameters, e.g. the parameters for a new horn 5. If the signal in one or more sensor units 6, 7, 8 is not interrupted and/or the calculated parameter is greater than the reference parameter, the horn 5 is missing, or the horn 5 is damaged. To achieve a precise measurement of the horn 5 of the pantograph, the clock frequency of the sensor unit 6, 7, 8 may be determined on the basis of the maximum speed of the railway vehicles. Hereby, it is possible to determine the state of the horn 5 of the pantograph.

In an alternative embodiment, the sensor unit may be constructed so that the horn 5 may pass between the transmitter and the receiver, whereby the horn 5 of the pantograph interrupts or disturbs the signal between the transmitter and the receiver instead of reflecting the signal.

In a second alternative embodiment, the state of the horn 5 of the pantograph may be detected by means of the laser 1 and the camera 2. Alternatively, at least one second camera 2 and/or at least one second laser 1 (not shown) may be arranged vertically above the one horn or both horns 5. The camera 2 may be connected to an analysis module and a decision module, which are capable of determining the state of the horn 5 of the pantograph on the basis of the recorded laser lines in the images.

The processor unit may comprise a controller which is capable of controlling the individual modules in the processor unit. The controller may be connected to a user interface (not shown), which may comprise at least one screen and a user-operated panel which may be used for operating the recording station. The stored images and the calculated values may be shown on the screen. Alternatively, the stored images and the calculated values may be transmitted via data cables and/or a wireless communications unit to an external operator/server, which is capable of operating the recording station via the data cables or the wireless communications unit.

The inspection system may be connected to at least one speedometer (not shown) which is capable of recording the speed of the railway vehicles, so that it is possible to activate the recording station from a sleep state and optionally to initialize the recording station before the railway vehicle passes by. After the railway vehicle has passed by, the inspection system may return to the sleep state. The inspection system may optionally be activated and/or operated via the external operator/server.

The recording station may comprise a power supply circuit, which may be connected to an external and/or internal power supply. The power supply circuit may alternatively comprise a rechargeable power supply, which may be connected to one or more solar cells or another form of transducer.

## Claims

1. A method and a system for the inspection of pantographs, in particular on railway carriages, comprising at least one light source (1) which illuminates at least one pantograph, at least one camera (2) which records one or more images of the pantograph, and a processor which analyzes the images from the camera in order to determine the state of the pantograph, **characterized in that** the light source (1) illuminates the pantograph from a vertical plane and emits a plurality of parallel laser beams which illuminate the entire or parts of the pantograph, such as at least one carbon path (3) on the pantograph.

2. A method according to claim 1, **characterized in that** the light source (1) emits one or more parallel laser beams, which form a plurality of laser lines on the upper side of the pantograph, which are approximately parallel with the longitudinal direction of the pantograph.

3. A method according to any one of claims 1 - 2, **characterized in that** the camera (2) is connected to at least one analysis module and at least one decision module in the processor, which analyze the images in order to determine the state of the pantograph.

4. A method according to claim 3, **characterized in that** the decision module determines either the thickness of at least one carbon path (3) on the pantograph, irregularities in the surface of the carbon path (3) and/or disuniform wear on the carbon path (3) on the basis of the laser lines.

5. A method according to any one of claims 1 - 4, **characterized in that** at least the one horn (5) on the pantograph passes at least one sensor unit (6, 7, 8), which comprises at least one transmitter and at least one receiver, and which registers when the pantograph passes the sensor unit.

6. A method according to claim 5, **characterized in that** the sensor units (6, 7, 8) are connected to a sensor module which determines the state of the horn (5) of the pantograph.

7. A method according to any one of claims 1 - 4, **characterized in that** the light source (1) illuminates at least the one horn (5) on the pantograph, and that an analysis module and a decision module in the processor determine the state of the horn (5) of the pantograph on the basis of the images.

8. A system for the inspection of pantographs, comprising at least one light source (1) intended to illuminate at least one pantograph, at least one camera (2) disposed in another plane than the light source, and a processor connected to the light source and the camera and intended to analyze the images from the camera, **characterized in that** the light source (1) is disposed in a vertical plane and emits a plurality of parallel laser beams which illuminate the entire or parts of the pantograph, such as at least one carbon path (3) on the pantograph.

9. A system according to claim 8, **characterized in that** the light source (1) comprises one or more lasers, and that the lasers emit one or more parallel laser beams, which form a plurality of laser lines on the upper side of the pantograph, which are approximately parallel with the longitudinal direction of the pantograph.

10. A system according to any one of claims 8 - 9, **characterized in that** the camera (2) is an area scan camera connected to at least one analysis module and at least one decision module in the processor, which determine the state of the pantograph on the basis of the images.

11. A system according to any one of claims 8 - 10, **characterized in that** the system comprises one or more sensor units (6, 7, 8), which are disposed near the one horn or both horns (5) on the pantograph, and which are intended to record the state of the horn (5) of the pantograph.

12. A system according to claim 11, **characterized in that** the sensor unit (6, 7, 8) comprises at least one transmitter and at least one receiver, both of which are connected to a sensor module in the processor, and which are capable of detecting when the pantograph passes the sensor units (6, 7, 8).

13. A system according to any one of claims 8 - 10, **characterized in that** the light source (1) illuminates at least the one horn (5) on the pantograph, and that the camera (2) is connected to an analysis module and a decision module in the processor, which determine the state of the horn (5) of the pantograph on the basis of the images.
